(19) Europäisches Patentamt / European Patent Office / Office européen des brevets

(11) **EP 3 055 965 B1**

(12) **FASCICULE DE BREVET EUROPEEN**

(45) Date de publication et mention de la délivrance du brevet:
**22.07.2020 Bulletin 2020/30**

(21) Numéro de dépôt: **14780504.8**

(22) Date de dépôt: **03.10.2014**

(51) Int Cl.:
*H04L 29/08* $^{(2006.01)}$    *G06F 21/53* $^{(2013.01)}$
*H04L 29/06* $^{(2006.01)}$

(86) Numéro de dépôt international:
**PCT/EP2014/071222**

(87) Numéro de publication internationale:
**WO 2015/052084 (16.04.2015 Gazette 2015/15)**

(54) **PROCEDE ET DISPOSITIF D'AUTHENTIFICATION ET D'EXECUTION SECURISEE DE PROGRAMMES**

VERFAHREN UND VORRICHTUNG ZUR SICHEREN AUTHENTIFIZIERUNG UND AUSFÜHRUNG VON PROGRAMMEN

METHOD AND DEVICE FOR THE SECURE AUTHENTICATION AND EXECUTION OF PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2013 FR 1359732**

(43) Date de publication de la demande:
**17.08.2016 Bulletin 2016/33**

(73) Titulaire: **Commissariat à l'Énergie Atomique et aux Énergies Alternatives 75015 Paris (FR)**

(72) Inventeurs:
• **HUBERT, Laurent**
  **F-78180 Montigny-le-Bretonneux (FR)**
• **SIRDEY, Renaud**
  **F-78720 Cernay-la-Ville (FR)**

(74) Mandataire: **Lopez, Frédérique**
  **Marks & Clerk France**
  **Immeuble Visium**
  **22 Avenue Aristide Briand**
  **94117 Arcueil Cedex (FR)**

(56) Documents cités:
**EP-A1- 2 278 514    US-A1- 2011 302 400**

• **DESCHER M ET AL: "Retaining Data Control to the Client in Infrastructure Clouds", AVAILABILITY, RELIABILITY AND SECURITY, 2009. ARES '09. INTERNATIONAL CONFERENCE ON, IEEE, PISCATAWAY, NJ, USA, 16 mars 2009 (2009-03-16), pages 9-16, XP031469173, ISBN: 978-1-4244-3572-2**
• **HUBERT LAURENT ET AL: "Authentication and Secured Execution for the Infrastructure-as-a-Service Layer of the Cloud Computing Model", 2013 EIGHTH INTERNATIONAL CONFERENCE ON P2P, PARALLEL, GRID, CLOUD AND INTERNET COMPUTING, IEEE, 28 octobre 2013 (2013-10-28), pages 291-297, XP032530506, DOI: 10.1109/3PGCIC.2013.49**

## Description

## Domaine de l'invention

L'invention concerne le domaine de la virtualisation et en particulier concerne l'authentification et l'exécution sécurisée de programmes.

## Etat de la Technique

Un enjeu majeur pour les infrastructures utilisant l'informatique en nuage ou « Cloud Computing » selon l'anglicisme consacré, est la sécurité et la confidentialité des données.

Le Cloud Computing offre un environnement de sauvegarde de données sur des serveurs distants, et est basé sur trois couches de services. La couche basse est la couche d'infrastructure en tant que service ou « Infrastructure-as-a-service » (Iaas) en anglais qui offre les éléments informatiques matériels comme les serveurs, les routeurs, les disques de stockage. La couche intermédiaire est la couche de plateforme en tant que service ou « Platform-as-a-service » (Paas) en anglais, qui offre les environnements d'exploitation (systèmes d'exploitation et applications associées). La couche supérieure est la couche de logiciel en tant que service ou « Software-as-a-service » (Saas) en anglais, qui offre des applications hébergées à distance et constituant le nuage.

Dans le cadre d'un service d'Iaas, le matériel informatique pour un client (entreprise ou particulier) utilisateur du service, est hébergé et géré par un fournisseur d'Iaas. Pour le partage les ressources informatiques entre les clients, le fournisseur d'Iaas a généralement recours à des techniques de virtualisation utilisant des machines virtuelles ou « Virtual Machines » (VM) en anglais incluant des moniteurs ou hyperviseurs de VM. Le fournisseur d'Iass est alors responsable de la sécurité des machines virtuelles, de la sécurité et de l'intégrité des données contenues sur les machines. Les programmes doivent s'y exécuter de manière sécurisée. Or, l'hyperviseur est une couche logicielle entre le matériel et le système d'exploitation qui quand il y a des attaques peut se comporter de manière malicieuse.

Ainsi, l'exécution sécurisée de programmes est un besoin qui a donné lieu à de nombreuses approches. Certaines solutions sont décrites ci-après.

La demande de brevet U.S. 2012/0173866 A1 de R. Ashok et al. intitulé « System for securing virtual machine disks on a remote shared storage subsystem » propose une solution logicielle de stockage et d'exécution de VM chiffrées au sein du modèle de Cloud Computing où l'hyperviseur du cloud se charge de sélectionner une machine virtuelle à activer et d'établir une clé de déchiffrement.

Dans le brevet U.S. 6,895 ,506 de L. Abu-Husein, intitulé « Secure storage and execution of processor control programs by encryption and a program loader/decryption mechanism », une solution uniquement à base de logiciel est présentée pour l'exécution de programmes chiffrés. Des instructions du programme forment des blocs de programme chiffrés. Lors de son exécution, le programme est déchiffré et placé dans une mémoire temporaire. A la fin de l'exécution, la mémoire est effacée. Un inconvénient de cette approche est que le programme placé en mémoire temporaire est stocké en clair et laisse alors la possibilité d'attaques par une couche logicielle bas niveau devenue malicieuse.

L'article de A. Averbuch et al. « An efficient VM-based software protection » 121-128, 2011, présente un système qui permet l'exécution de programmes chiffrés. Les programmes sont chiffrés et déchiffrés à l'aide d'un « framework » qui est aussi l'entité qui gère les accès en mémoire. L'inconvénient de cette approche est qu'elle est entièrement logicielle.

D'autres solutions basées sur de l'encryption homomorphique de circuits existent, mais présentant l'inconvénient d'introduire de la charge supplémentaire qui impacte considérablement les performances globale de l'infrastructure.

Ainsi, les solutions connues ne répondent pas au besoin d'une exécution sécurisée de programmes dans un environnement de machines virtuelles, et en particulier dans le contexte d'une infrastructure en tant que service du modèle de l'informatique en nuage. L'invention proposée permet de répondre à ce besoin.

## Résumé de l'invention

Un objet de la présente invention est de proposer un système et un procédé pour chiffrer une machine virtuelle par chiffrement et déchiffrement à la volée de la mémoire.

Avantageusement la solution de l'invention qui comprend des éléments matériels et logiciels ne nécessite pas que le processeur du serveur qui exécute les chiffrements/déchiffrement soit modifié.

Ainsi avantageusement, un seul composant, le module qui exécute le chiffrement/déchiffrement à la volée, a accès à la mémoire chiffrée.

Avantageusement, le code du programme exécuté n'est pas visible pour l'hyperviseur.

Le dispositif de l'invention permet de protéger des attaques par relocations ainsi que des attaques à clairs connus qui pourraient se produirent, en effet la probabilité que deux clairs identiques aient le même chiffré étant négligeable grâce au format des blocs chiffrés.

Un autre objet de la présente invention est de proposer un procédé permettant l'authentification et l'exécution sécurisées de programmes dans le contexte de la couche d'infrastructure en tant que service (Iaas) du modèle de Cloud Computing. Le procédé permet de faire le lien entre la sécurité physique des serveurs du nuage informatique et la sécurité système. L'utilisateur a ainsi la garantie que son image mémoire, incluant les instructions et les données sur le nuage, est protégée

contre toute corruption logicielle de la couche hypervision.

**[0017]** Selon l'invention, chaque programme chiffré va établir une clé de chiffrement/déchiffrement spécifique à chaque machine virtuelle, clé qui est chargée dans le module de chiffrement.

**[0018]** Toujours selon l'invention, l'hyperviseur exécute une interruption temporelle avant de restaurer le contexte d'une machine virtuelle. Pendant l'interruption, l'hyperviseur donne la main à une VM. Ainsi, avantageusement, le procédé selon l'invention permet d'effectuer des entrées/sorties sous interruption sans aucune modification du processeur utilisé.

**[0019]** L'invention s'applique dans un environnement d'informatique en nuage composé d'une pluralité de serveurs et de terminaux clients aptes à se connecter au nuage. L'un des serveurs comprend un processeur et une mémoire principale permettant l'exécution d'un logiciel d'hypervision pour affecter des machines virtuelles aux terminaux clients. Le dispositif comprend :

- un module de génération d'image mémoire chiffrée pour générer, en réponse à une requête de connexion au nuage d'un terminal utilisateur, une image mémoire chiffrée d'une machine virtuelle assignée au terminal client ;
- un serveur de stockage pour stocker l'image mémoire chiffrée ; et
- un module de sécurité couplé au serveur de stockage et audit l'un des serveurs, pour exécuter en réponse à des requêtes de lecture/écriture de données reçues du processeur dudit l'un des serveurs, des opérations de chiffrement et déchiffrement à la volée du flot de données associé à la dite image mémoire chiffrée.

**[0020]** Dans une implémentation particulière, le module de génération d'image mémoire chiffrée comprend des moyens pour :

- recevoir une requête de connexion au nuage d'un terminal client ;
- établir une connexion bilatéralement authentifiée entre le terminal client et le nuage ;
- générer une clé de chiffrement privée pour assigner une image mémoire virtuelle au terminal client ;
- télécharger sur le terminal client l'image mémoire virtuelle assignée ;
- chiffrer l'image mémoire virtuelle assignée ; et
- télécharger l'image mémoire virtuelle assignée et chiffrée sur le nuage.

**[0021]** Avantageusement, les moyens pour établir la connexion authentifiée entre le terminal client et le nuage comprennent des moyens de type lecteur de carte à puce couplé au terminal client pour calculer une clé de chiffrement en fonction d'un code personnel stocké sur la carte à puce et des moyens couplé à un serveur d'authentification du nuage pour opérer une authentification à réception du code personnel.

**[0022]** Avantageusement, le code personnel est un secret à long terme de 128 bits.

**[0023]** Toujours avantageusement, la clé de chiffrement privée générée pour une machine virtuelle est fonction du code personnel. Elle est avantageusement stockée sur le serveur d'authentification.

**[0024]** Dans un mode opératoire particulier, l'exécution d'une opération de chiffrement ou déchiffrement à la volée opérée en réponse à une requête de lecture d'un mot à une adresse claire de la mémoire de l'un des serveurs consiste à :

- recevoir du serveur d'authentification la clé de chiffrement privée ;
- récupérer dans l'image mémoire chiffrée un bloc de données chiffré contenant l'adresse claire du mot à lire ;
- déchiffrer le bloc chiffré avec la clé de chiffrement privée ;
- extraire le mot à lire dans le bloc déchiffré ; et
- envoyer le mot extrait au processeur dudit l'un des serveurs.

**[0025]** Dans un autre mode opératoire particulier, l'exécution d'une opération de chiffrement ou déchiffrement à la volée opérée en réponse à une requête d'écriture d'un mot à une adresse claire dans la mémoire dudit l'un des serveurs consiste à :

- recevoir du serveur d'authentification la clé de chiffrement privée ;
- récupérer dans l'image mémoire chiffrée un bloc de données chiffré contenant l'adresse claire du mot à écrire ;
- déchiffrer le bloc chiffré avec la clé de chiffrement privée; et
- écrire le mot à l'adresse claire dans le bloc déchiffré.

**[0026]** Avantageusement, les opérations d'entrées/sorties sont réalisées sous interruption, et le dispositif comprend un module de gestion des interruptions.

**[0027]** L'invention a aussi pour objet une méthode opérée dans un environnement d'informatique en nuage composé d'une pluralité de serveurs et de terminaux clients aptes à se connecter au nuage. L'un des serveurs comprend un processeur et une mémoire principale permettant l'exécution d'un logiciel d'hypervision pour affecter des machines virtuelles aux terminaux clients, et la méthode comprend les étapes de :

- en réponse à une requête de connexion au nuage d'un terminal client, générer une image mémoire chiffrée d'une machine virtuelle assignée au terminal client;
- stocker sur un serveur de stockage l'image mémoire chiffrée ; et

- en réponse à des requêtes de lecture/écriture de données reçues du processeur dudit l'un des serveurs, exécuter des opérations de chiffrement et déchiffrement à la volée du flot de données associé à la dite image mémoire chiffrée.

Avantageusement, l'étape de génération d'une image mémoire chiffrée comprend de plus les étapes :

- recevoir une requête de connexion au nuage d'un terminal client ;
- établir une connexion bilatéralement authentifiée entre le terminal client et le nuage ;
- générer une clé de chiffrement privée pour assigner une image mémoire virtuelle au terminal client ;
- télécharger sur le terminal client l'image mémoire virtuelle assignée;
- chiffrer l'image mémoire virtuelle assignée ; et
- télécharger l'image mémoire virtuelle assignée et chiffrée sur le nuage.

Dans un mode opératoire particulier, l'étape pour établir la connexion authentifiée entre le terminal client et le nuage comprend une étape de calcul d'une clé de chiffrement en fonction d'un code personnel stocké sur une carte à puce lue par des moyens de type lecteur de carte à puce couplé au terminal client et une étape d'authentification du code personnel à réception du code par le serveur d'authentification.

Dans un autre mode particulier, l'exécution d'une opération de chiffrement ou déchiffrement à la volée est opérée en réponse à une requête de lecture d'un mot à une adresse claire de la mémoire dudit l'un des serveurs et comprend les étapes de :

- recevoir du serveur d'authentification une clé de chiffrement privée;
- récupérer dans l'image mémoire chiffrée un bloc de données chiffré contenant l'adresse claire du mot à lire ;
- déchiffrer le bloc chiffré avec la clé de chiffrement privée ;
- extraire le mot à lire dans le bloc déchiffré ; et
- envoyer le mot extrait au processeur dudit l'un des serveurs.

Dans une variante opératoire, l'exécution d'une opération de chiffrement ou déchiffrement à la volée est opérée en réponse à une requête d'écriture d'un mot à une adresse claire dans la mémoire dudit l'un des serveurs et comprend les étapes de :

- recevoir du serveur d'authentification une clé de chiffrement privée;
- récupérer dans l'image mémoire chiffrée un bloc de données chiffré contenant l'adresse claire du mot à écrire ;
- déchiffrer le bloc chiffré avec la clé de chiffrement privée; et
- écrire le mot à l'adresse claire dans le bloc déchiffré.

L'invention peut opérer sous la forme d'un produit programme d'ordinateur qui comprend des instructions de code permettant d'effectuer les étapes du procédé revendiqué lorsque le programme est exécuté sur un ordinateur.

## Description des figures

Différents aspects et avantages de l'invention vont apparaitre en appui de la description d'un mode préféré d'implémentation de l'invention mais non limitatif, avec référence aux figures ci-dessous où :

La figure 1 illustre schématiquement un environnement de nuage informatique dans lequel implémenter avantageusement l'invention ;
La figure 2 est un schéma des composants du dispositif de la présente invention ;
La figure 3 montre la procédure exécutée pour le chiffrement d'une image mémoire lors de la création d'une machine virtuelle ;
La figure 4 montre la procédure exécutée lors d'un changement de machine virtuelle dans le processeur selon le principe de l'invention ;
La figure 5 montre la procédure exécutée lors d'un changement de machine virtuelle lors d'une interruption au niveau de l'hyperviseur selon le principe de l'invention ;
La figure 6 montre la procédure exécutée lors du traitement d'une interruption utilisateur selon le principe de l'invention.

## Description détaillée de l'invention

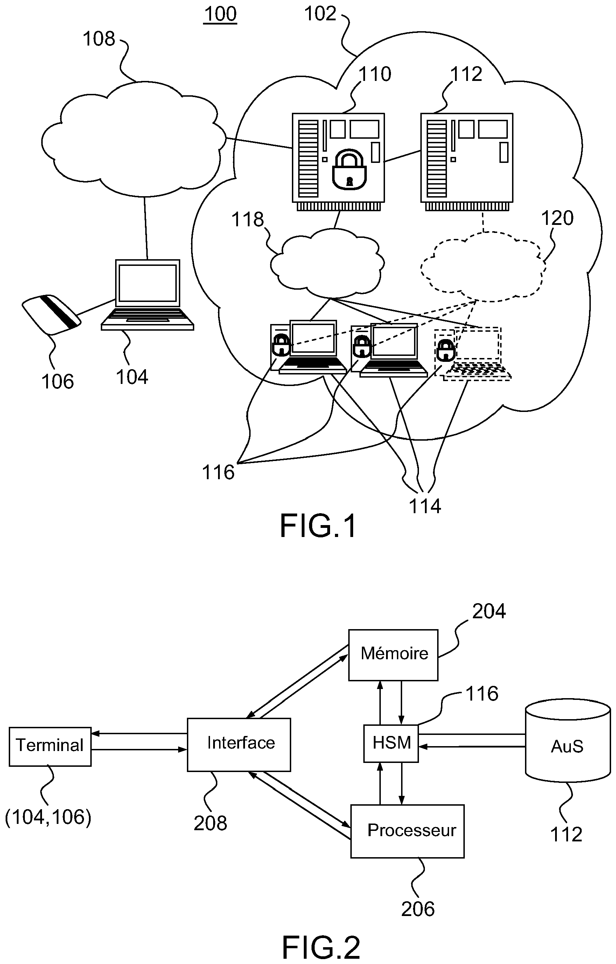

La figure 1 illustre schématiquement un environnement de nuage informatique 100 dans lequel implémenter avantageusement l'invention. Il doit être compris que l'environnement montré est illustratif d'un exemple d'une infrastructure en tant que service dans un modèle de nuage informatique propre à permettre la compréhension de l'invention, mais que tous les éléments d'un tel environnement ne sont pas nécessairement illustrés. A la lecture de la description, il deviendra apparent à l'homme du métier que des variantes peuvent être apportées à l'implémentation décrite.

La figue 1 montre l'infrastructure en tant que service (Iaas) d'un nuage informatique 102 par lequel un utilisateur ou souscripteur peut accéder à des services et applications.

L'utilisateur se connecte au nuage via un terminal 104 communément appelé hôte ou terminal client et équipé d'un dispositif 106 permettant de réaliser des opérations cryptographiques de façon sécurisée. Un tel dispositif peut par exemple être une carte à puce. L'accès du client au nuage informatique peut passer par un réseau non sécurisé 108 tel le réseau public internet.

L'utilisateur s'authentifie par la carte à puce par un mécanisme de mot de passe comme une identification par numéro d'identifiant personnel ou code PIN par exemple. La carte à puce est utilisée pour réaliser des opérations où la notion de sécurité est primordiale telle que le stockage d'un secret à long terme (LTS pour Long Term Secret en anglais) qui est unique pour chaque carte à puce ou pour réaliser des opérations algorithmiques telles que de l'authentification par challenge/réponse et de l'établissement de clés. De plus, la carte à puce peut embarquer un générateur de nombres pseudo-aléatoire. Une telle carte à puce peut être fournie et maintenue par l'opérateur de l'informatique en nuage.

Le nuage 102 comprend un ou plusieurs routeurs 110 tels que des relais ou passerelles, un ou plusieurs serveurs d'authentification 112, noté 'AuS' pour 'Authentification Server', et un ensemble de machines ou serveurs VM 114 permettant d'opérer des machines virtuelles. Chaque serveur peut être équipé d'un processeur simple ou multi-cœur. Chaque cœur de processeur est associé, au moins fonctionnellement, à un module de sécurité 116, noté 'HSM' pour 'Hardware Security Module'.

Le routeur 110 propose une interface entre le nuage informatique 102 et le réseau externe non sécurisé 108 auquel le client se connecte pour accéder au nuage.

Le serveur d'authentification 112 (AuS) est une base de données critique en termes de sécurité qui contient entre autre les secrets à long terme (LTS) associés à chaque client. Le serveur d'authentification fournit aussi toute l'algorithmique permettant d'établir des clés d'authentification pour les procédures de challenge/réponse.

Les serveurs VM 114 sont les machines sur lesquelles vont s'exécuter les machines virtuelles associées aux utilisateurs. Chaque serveur VM (114) exécute un logiciel d'hypervision ou hyperviseur pour partager efficacement les ressources entre les différentes machines virtuelles (VM).

Chaque serveur VM est couplé à un module de sécurité 116 dont le contenu et les fonctions ne sont pas accessibles physiquement par le processeur. Le module de sécurité HSM agit comme un proxy et est responsable des déchiffrements/chiffrements à la volée des données et des instructions qui entrent et sortent du processeur. Le module HSM a une relation privilégiée avec le serveur d'authentification 112, comme étant le seul composant d'un serveur ayant les droits pour envoyer des requêtes au serveur d'authentification.

Deux réseaux indépendants (118, 120) opèrent au sein du nuage informatique. Un premier réseau utilisateur 118 permet une interconnexion entre une interface réseau utilisateur d'un serveur (110) et l'ensemble de l'infrastructure du nuage. Un second réseau de contrôle 120 permet l'interconnexion des modules HSM avec le serveur d'authentification via une interface de réseau contrôlée dédiée.

La figure 2 montre schématiquement les composants du dispositif de la présente invention. Il est à noter que les composants décrits en relation à la figure 1 sont désignés par les mêmes références.

Un module de sécurité 116 est couplé d'une part au processeur 206 d'un serveur VM et d'autre part à la mémoire principale 204 du serveur VM. Le module de sécurité est en communication avec le serveur d'authentification 112 pour envoyer des requêtes via le réseau de contrôle 120.

Dans une implémentation préférentielle, le processeur utilisé est un processeur de type 'RISC' (Reduced Instruction Set Computer en anglais), et plus particulièrement un processeur de 32 bits de type 'PMIPS32' (Microprocessor without Interlocked Pipeline Stages en anglais). Les bus de communication sont de 32-bits, et la mémoire principale opère sur une plage allant de 0 à 0xffffffff. Le module de sécurité HSM est une mémoire de type MMC (Memory Model Component en anglais).

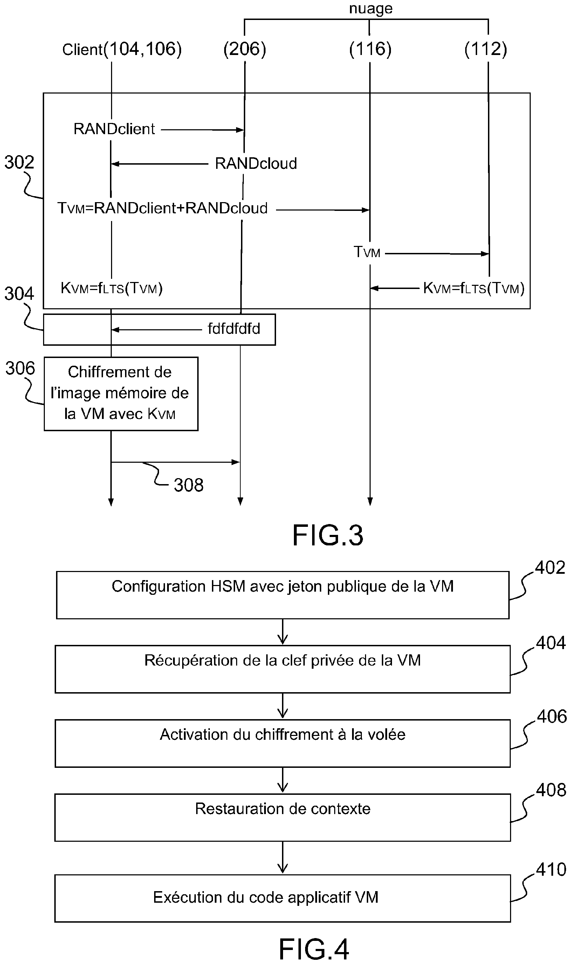

La figure 3 montre les procédures exécutées pour le chiffrement d'une image mémoire lors de la création d'une machine virtuelle pour un terminal client. L'empreinte mémoire de la VM est définie statiquement lors sa création.

Selon le procédé de l'invention, la création d'une VM chiffrée pour un client se fait selon les étapes suivantes :

302 : Établissement d'une connexion bilatéralement authentifiée et privée entre le client et le nuage ;
304 : Téléchargement sur le poste client d'une image mémoire virtuelle vide à partir du nuage ;
306 : Chiffrement de l'image mémoire virtuelle sur le poste client ; et
308 : Téléchargement de l'image mémoire virtuelle chiffrée dans le nuage sur la machine virtuelle associée au client.

Dans une variante, le chiffrement de l'image mémoire virtuelle peut se faire au niveau du nuage sur le serveur d'authentification.

Il est à noter que la clé de chiffrement d'une machine virtuelle est propre à chaque machine virtuelle.

Quand une machine virtuelle a été créée, l'utilisation de celle-ci se fait selon les étapes suivantes :

- Établissement d'une connexion bilatéralement authentifiée et privée avec le nuage ;
- Sélection et connexion à la machine virtuelle existante pour obtenir la clé de chiffrement ; et
- Interaction avec la machine virtuelle sélectionnée.

L'étape d'établissement de la connexion authentifiée au nuage est optionnelle si la connexion a déjà été établie lors d'une opération précédente. L'étape d'authentification bilatérale a pour but de fournir aux deux parties, le client et le nuage, la garantie qu'ils communiquent avec la bonne entité. Elle fournit aussi une clé de session pour créer un tunnel de communication privé (VPN) utilisant des algorithmes symétriques.

Dans une implémentation préférentielle, la connexion au nuage se fait avec une carte à puce qui contient un code personnel pour le demandeur de préférence une clé secrète à long terme (LTS) de 128 bits. Cette clé unique à chaque client est seulement connue par le nuage via le serveur d'authentification (AuS) et est utilisée lors de l'établissement des clés de chiffrement et de déchiffrement.

Dans un mode préféré, l'étape d'authentification 302 est réalisée par un échange selon le principe du challenge/réponse qui se déroule selon les étapes connues suivantes :

- Le nuage et le client s'envoient un challenge de 128 bits d'aléas : $RAND_{ClouD}$ pour le nuage, $RAND_{ClienT}$ pour le client ;
- Le nuage et le client calculent la réponse: $RES_{ClouD}=f_{LTS}(RAND_{ClienT})$ pour le nuage, $RES_{ClientT}=f_{LTS}(RAND_{CD})$ pour le client ;
- Le nuage et le client s'envoient leur réponse : $RES_{ClouD}$, $RES_{ClienT}$; et
- Le nuage et le client effectuent respectivement un même calcul et vérifient si la valeur reçue est bien celle calculée, garantissant ainsi l'authentification.

Avantageusement, l'étape 306 de chiffrement de l'image mémoire de la VM se fait durant la souscription du client au nuage. Lors de la connexion au nuage, un jeton $T_{VM}$ est généré à partir des deux aléas de 128 bits qui ont été générés pour le challenge. Ce jeton de valeur $T_{VM}= RAND_{CD} \oplus RAND_{CT}$ est unique et associé uniquement à la machine virtuelle assignée à l'utilisateur.

Avantageusement, le jeton $T_{VM}$ n'a pas besoin d'être secret car la clé de chiffrement $K_{VM}$ utilisée pour la mémoire virtuelle est calculée en fonction du secret et du jeton de la façon suivante :

$$K_{VM}=f_{LTS}(T_{VM}) \ .$$

Chaque fois que cela est nécessaire, la clé peut être recalculée.

Pour illustrer sur un exemple d'une implémentation préférentielle, les données de l'image mémoire de la machine virtuelle associée à une plateforme d'exécution d'une machine de 32 bits, sont chiffrées de la façon suivante :
Soit $w_0$, $w_1$, ..., $w_{2N-1}$, la séquence de $2N \leq 2^{32}$ mots de 32 bits constituant l'image mémoire de la VM. Les 64 bits des couples $(w_{2i}, w_{2i+i})(i=0...N-1)$ sont remplacés par un bloc de 128 bits 'B$_i$' calculé comme suit :

$$B_i=AES_{KVM}(w_{2i}||w_{2i+1}||0x0000||R_{16}||2i)$$

où $||$ est l'opérateur de concaténation et $R_{16}$ est un nombre aléatoire de 16 bits. Le couple $(w_{2i}||w_{2i+1})$ représente la charge utile de données ou d'instructions du bloc de 128 bits. Les 64 bits restants fournissent les propriétés de sécurité adéquates.

Ainsi, la probabilité pour qu'une tierce personne forge un bloc valide sans connaitre $K_{VM}$ est au mieux de $2^{-48}$ puisque déchiffrer un bloc 'B$_i$' revient à retrouver 128 bits d'aléa qui possèdent 16 bits de zéro et 32 bits de décalage correspondant au format du bloc en clair.

Toujours avantageusement, la présence d'un nombre aléatoire $R_{16}$ empêche qu'une même charge utile claire successivement à la même position ait deux blocs chiffrés de 128 bits identiques.

Par ailleurs, le champ 2i représente l'adresse du bloc relativement par rapport au début de l'image mémoire de la VM. Ceci garantit que deux blocs identiques en charge utile, n'ont pas le même chiffré même si les 16 bits d'aléa sont identiques. Ainsi un algorithme de chiffrement connu comme l' « Advanced Encryption Standard » (AES) en anglais, peut être utilisé en mode « Electronic Code Book » (ECB) en anglais, afin de pouvoir accéder à la mémoire de façon aléatoire. Cependant, d'autres algorithmes de chiffrement peuvent être utilisés, comme l'algorithme CAST-128 par exemple.

Un avantage supplémentaire de la présence du champ 2i est d'assurer qu'un bloc chiffré valide appartenant à une VM ne puisse pas être déplacé au sein de l'image mémoire de la même VM. Ainsi, les attaques par relocalisations sont évitées puisque le champ 2i obtenu après le déchiffrement du bloc ne correspondra plus à l'adresse relative à laquelle le bloc chiffré à été réécrit. En termes d'efficacité, l'empreinte mémoire de la VM est augmentée d'un facteur 2.

Dans une variante opératoire, seule la partie initialisée de l'image mémoire de la VM peut être envoyée au client pour être chiffrée afin d'éviter de gros transferts de données entre le nuage et le client. La partie non initialisée de l'image mémoire de la VM est alors constituée de blocs de 128 bits prédéfinis, par exemple *fdfd...fd*.

La figure 4 illustre les étapes opérées lors du basculement d'une machine virtuelle dans le processeur. Comme décrit précédemment, l'exécution d'une machine virtuelle chiffrée est rendue possible grâce à l'ajout du module HSM de chiffrement/déchiffrement qui opère entre le processeur et la mémoire externe.

Lorsqu'une VM doit être lancée et exécutée par le processeur, l'hyperviseur commence à l'étape 402 par configurer le module HSM en lui fournissant le jeton $T_{VM}$ de la VM. Ce jeton est présent comme préambule dans le programme qui représente l'image mémoire virtuelle chiffrée.

L'étape suivante 404 consiste pour le module HSM à récupérer la clé $K_{VM}$ de chiffrement/déchiffrement. Soit, elle est disponible dans une mémoire cache du module HSM, soit le jeton $T_{VM}$ est envoyé au serveur d'authentification AuS pour en retour recevoir la clé de chiffrement/déchiffrement $K_{VM}$ qui y est stockée.

A réception de la clé, le module HSM peut activer (406) le chiffrement/déchiffrement à la volée pour le flot d'instructions et de données provenant de la VM.

Ainsi, le processeur et donc l'hyperviseur ne peuvent envoyer que deux types de requêtes de configuration au module HSM :

- des requêtes de passage en mode chiffré : « cipher_mode(base$_{VM}$, T$_{VM}$) » pour réaliser des échanges chiffrés avec la mémoire avec la clé K$_{VM}$=f$_{LTs}$(T$_{VM}$) ;

- des requêtes de passage en mode clair : « clear_mode » pour réaliser des échanges clairs avec la mémoire, échanges particulièrement réservés pour du code système.

Tel qu'il est détaillé plus bas, lors de l'exécution d'une requête, le contexte qui est stocké en zone chiffrée va être restauré (étape 408) avant de permettre la reprise de l'exécution du code applicatif de la tâche qui a été interrompue (étape 410).

Sur l'exemple pris précédemment pour des mots de 32 bits, si le processeur doit faire une opération de lecture à l'adresse claire *'ptr'* d'un mot de données ou d'instructions lors d'une requête de type chiffré, le module HSM récupère les 128 bits du bloc chiffré correspondant, à l'adresse physique suivante dans la VM :

$$base_{VM}+(ptr\&0\text{xfffffffe})<<1$$

où *base$_{VM}$* est l'adresse physique du début de la VM.

Puis le module HSM déchiffre avec la clé K$_{VM}$ le bloc de 128 bits chiffré. C'est l'opération de déchiffrement à la volée. Il récupère les 128 bits de clair et vérifie l'intégrité des données. Il est à noter que le cinquième mot de 16 bits doit être nul et le quatrième mot de 32 bits doit être égal à *ptr&0xfffffffe.*

Le HSM envoie au processeur soit le premier mot si l'adresse clair est paire ou le deuxième mot si l'adresse clair est impaire.

De façon similaire, si le processeur doit écrire en mémoire un mot de 32 bits à l'adresse clair *'ptr',* le module HSM récupère les 128 bits du bloc chiffré correspondant à l'adresse physique suivante : *base$_{VM}$+(ptr&0xfffffffe)<<1* où *base$_{VM}$* est l'adresse physique du début de la VM.

Le module HSM déchiffre le bloc chiffré avec la clé K$_{VM}$, puis vérifie l'intégrité des données. Il remplace ensuite le premier mot si l'adresse clair est paire ou le deuxième mot si l'adresse clair est impaire avec le mot de 32 bits à écrire.

Puis le module HSM chiffre le nouveau clair de 128 bits, c'est l'opération de chiffrement à la volée. Le bloc chiffré est envoyé à la mémoire VM pour être écrit à l'adresse indiquée plus haut.

Ainsi, le module HSM de chiffrement/déchiffrement permet un chiffrement ou un déchiffrement à la volée d'un flot de données ou d'instructions relative à une machine virtuelle qui est sollicitée.

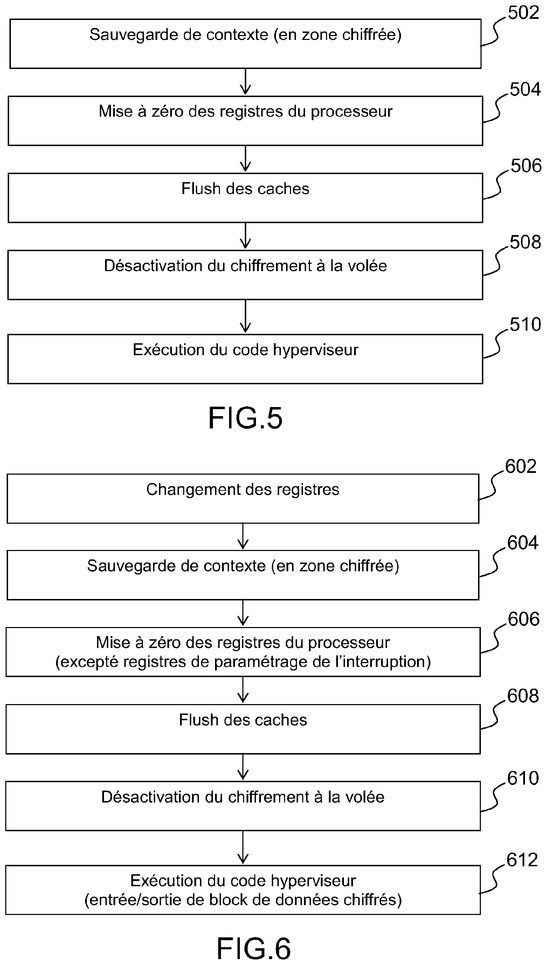

La figure 5 montre les procédures exécutées lors du changement d'une machine virtuelle hors du processeur, déclenché par une interruption au niveau de l'hyperviseur.

Avant que l'hyperviseur ne reprenne la main, un handler d'interruptions stocké dans de la ROM est exécuté pour partiellement réinitialiser le processeur.

Dans une première étape (502) le contexte d'exécution de la machine virtuelle est sauvegardé à une adresse relative dans l'espace mémoire chiffré de la VM. Puis à l'étape suivante (504), les registres utilisés par cette VM sont remis à zéro et le cache du processeur est vidé (506).

L'étape suivante (508) consiste à désactiver le chiffrement/déchiffrement à la volée pour passer le module HSM en mode clair, et éviter que l'hyperviseur n'ait accès à des données non chiffrées de la VM.

Ensuite, l'hyperviseur peut rependre la main pour exécuter le code en cours (étape 510).

La figure 6 illustre les opérations exécutées lors du traitement d'une interruption utilisateur. C'est par exemple le cas où pendant l'exécution d'une image mémoire chiffrée, le programme demande une intervention de la machine client, correspondant par exemple à une entrée sur le clavier ou un affichage sur une console, alors qu'une interruption est déjà effective.

D'une manière générale, les chiffrements et les déchiffrements de la mémoire sont réalisés du côté client, ainsi la clé K$_{VM}$ est calculée à partir du jeton T$_{VM}$ à l'aide de la carte à puce. Le client maintient une image mémoire locale du buffer d'entrées/sorties. L'image mémoire locale est déchiffrée/chiffrée à la volée sur la machine client quand l'utilisateur entre ou sort du nuage. Ainsi, les entrées/sorties sont toutes réalisées sous interruption, c'est-à-dire qu'une partie de la mémoire ROM contient des données en clair qui fournissent un mécanisme de gestion des interruptions.

L'interruption se déroule selon les étapes suivantes :

602 : les registres qui définissent les paramètres de l'interruption (type de l'interruption, adresse de l'écriture ou de la lecture) sont chargés dans le programme chiffré.

604 : le contexte (registres, compteur) est sauvegardé dans l'image mémoire chiffrée ;

606 : l'ensemble des registres est mis à zéro excepté les registres utilisés par l'interruption ;

608 : le cache du processeur est vidé ;

610 : le module HSM est basculé en mode clair ;

612 : l'hyperviseur procède aux entrées/sorties et envoie/reçoit les données au/du client.

Les entrées/sorties s'effectuent plus précisément de la manière suivante :

Le client reçoit le type de l'interruption (lecture ou écriture) ainsi que l'adresse claire au sein de l'image mémoire chiffrée et le bloc chiffré.

Le client déchiffre le bloc de 128 bits reçu avec la clé K$_{VM}$ et teste son intégrité. Si le test d'intégrité échoue, le client renvoit un signal d'erreur. Si le test d'intégrité réussit, le client agit en fonction du type de l'interruption :

- si l'interruption correspond à un affichage, le client affiche le premier mot si l'adresse claire est paire ou le deuxième mot si l'adresse claire est impaire ;
- si l'interruption correspond à une écriture, le client modifie dans le bloc de 128 bits clair, le premier mot de 32 bits si l'adresse claire est paire ou modifie le deuxième mot de 32 bits si l'adresse claire est impaire.

Puis le client chiffre le nouveau bloc modifié de 128 bits avec la clé K$_{VM}$ et envoie les 128 bits chiffrés au nuage.

Après la fin de l'interruption, le système retourne en mode nominal.

Ainsi, le procédé selon l'invention permet les changements et la sauvegarde de contextes lors de tâche, le passage d'un mode chiffré en mode clair, et inversement, les entrées/sorties sous interruption.

L'homme de l'art appréciera que des variations peuvent être apportées sur la méthode telle que décrite de manière préférentielle, tout en maintenant les principes de l'invention. La présente invention peut s'implémenter à partir d'éléments matériel et/ou logiciel. Elle peut être disponible en tant que produit programme d'ordinateur sur un support lisible par ordinateur. Le support peut être électronique, magnétique, optique, électromagnétique ou être un support de diffusion de type infrarouge. De tels supports sont par exemple, des mémoires à semiconducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

**Revendications**

**1.** Un dispositif pour exécuter des programmes encryptés dans un environnement d'informatique en nuage composé d'une pluralité de serveurs de machines virtuelles VM, chaque serveur VM comprenant un processeur apte à exécuter un logiciel d'hypervision pour affecter des machines virtuelles à des terminaux clients via un réseau utilisateur, et au moins un serveur d'authentification apte à établir une connexion bilatéralement authentifiée entre un terminal client et le nuage, le dispositif comprenant :

- des moyens pour établir une connexion bilatéralement authentifiée entre un terminal client et le nuage ;
- un module de génération d'une image mémoire chiffrée pour une machine virtuelle assignée audit terminal client en réponse à une requête de connexion au nuage reçue dudit terminal client ; et
- un module pour faire exécuter des opérations de chiffrement et déchiffrement à la volée des données en lecture/écriture associées à la dite image mémoire chiffrée, en réponse à des requêtes de lecture/écriture de données dans ladite image mémoire chiffrée, reçues par le processeur de ladite machine virtuelle ;

le dispositif étant **caractérisé en ce que** :

- le module de génération d'image mémoire chiffrée comprend des moyens pour :

  - générer une clé de chiffrement privée pour assigner une image mémoire virtuelle audit terminal client ;
  - télécharger sur ledit terminal client l'image mémoire virtuelle assignée ;
  - chiffrer l'image mémoire virtuelle assignée ; et
  - télécharger l'image mémoire virtuelle assignée et chiffrée sur le nuage ; et

- les moyens pour établir la connexion authentifiée entre ledit terminal client et le nuage comprennent des moyens de type lecteur de carte à puce couplé audit terminal client pour calculer une clé de chiffrement en fonction d'un code personnel stocké sur la carte à puce et des moyens couplés à un serveur d'authentification du nuage pour opérer une authentification à réception du code personnel.

**2.** Le dispositif selon la revendication 1 dans lequel le code personnel est un secret à long terme de 128 bits.

**3.** Le dispositif selon l'une quelconque des revendications 1 à 2 dans lequel la clé de chiffrement privée générée pour une machine virtuelle est fonction du code personnel.

**4.** Le dispositif selon l'une quelconque des revendications 1 à 3 dans lequel la clé de chiffrement privée est stockée sur le serveur d'authentification.

**5.** Le dispositif selon la revendication 4 dans lequel l'exécution d'une opération de chiffrement ou déchiffrement à la volée opérée en réponse à une requête de lecture d'un mot à une adresse claire de la mémoire dudit l'un des serveurs consiste à :

- recevoir du serveur d'authentification la clé de chiffrement privée ;
- récupérer dans l'image mémoire chiffrée un bloc de données chiffré contenant l'adresse claire du mot à lire ;
- déchiffrer le bloc chiffré avec la clé de chiffrement privée ;
- extraire le mot à lire dans le bloc déchiffré ; et
- envoyer le mot extrait au processeur dudit l'un des serveurs.

6. Le dispositif selon la revendication 4 dans lequel l'exécution d'une opération de chiffrement ou déchiffrement à la volée opérée en réponse à une requête d'écriture d'un mot à une adresse claire dans la mémoire dudit l'un des serveurs consiste à :

- recevoir du serveur d'authentification la clé de chiffrement privée ;
- récupérer dans l'image mémoire chiffrée un bloc de données chiffré contenant l'adresse claire du mot à écrire ;
- déchiffrer le bloc chiffré avec la clé de chiffrement privée; et
- écrire le mot à l'adresse claire dans le bloc déchiffré.

7. Le dispositif selon l'une quelconque des revendications 1 à 6 comprenant de plus un module de gestion des interruptions.

8. Une méthode pour exécuter des programmes encryptés, opérée dans un environnement d'informatique en nuage composé d'une pluralité de serveurs de machines virtuelles VM, chaque serveur VM comprenant un processeur apte à exécuter un logiciel d'hypervision pour affecter des machines virtuelles à des terminaux clients via un réseau utilisateur, et au moins un serveur d'authentification apte à établir une connexion bilatéralement authentifiée entre un terminal client et le nuage, la méthode comprenant les étapes de :

- après l'établissement d'une connexion bilatéralement authentifiée entre un terminal client et le nuage, générer une image mémoire chiffrée pour une machine virtuelle assignée audit terminal client en réponse à une requête de connexion au nuage reçue dudit terminal client; et
- en réponse à des requêtes de lecture/écriture de données dans ladite image mémoire chiffrée, reçues par le processeur de ladite machine virtuelle, faire exécuter des opérations de chiffrement et déchiffrement à la volée des données en lecture/écriture associées à ladite image mémoire chiffrée,

la méthode étant **caractérisée en ce que** :

- l'étape de génération d'une image mémoire chiffrée comprend de plus les étapes de :

- générer une clé de chiffrement privée pour assigner une image mémoire virtuelle audit terminal client ;
- télécharger sur ledit terminal client l'image mémoire virtuelle assignée ;
- chiffrer l'image mémoire virtuelle assignée ;
- télécharger l'image mémoire virtuelle assignée et chiffrée sur le nuage ; et

- l'étape pour établir la connexion authentifiée entre ledit terminal client et le nuage comprend une étape de calcul d'une clé de chiffrement en fonction d'un code personnel stocké sur une carte à puce lue par des moyens de type lecteur de carte à puce couplé audit terminal client et une étape d'authentification du code personnel à réception du code par le serveur d'authentification.

9. La méthode selon la revendication 8 dans laquelle l'exécution d'une opération de chiffrement ou déchiffrement à la volée est opérée en réponse à une requête de lecture d'un mot à une adresse claire de la mémoire dudit l'un des serveurs et comprend les étapes de :

- recevoir du serveur d'authentification une clé de chiffrement privée ;
- récupérer dans l'image mémoire chiffrée un bloc de données chiffré contenant l'adresse claire du mot à lire ;
- déchiffrer le bloc chiffré avec la clé de chiffrement privée ;
- extraire le mot à lire dans le bloc déchiffré ; et
- envoyer le mot extrait au processeur dudit l'un des serveurs.

10. La méthode selon la revendication 8 dans laquelle l'exécution d'une opération de chiffrement ou déchiffrement à la volée est opérée en réponse à une requête d'écriture d'un mot à une adresse claire dans la mémoire dudit l'un des serveurs et comprend les étapes de :

- recevoir du serveur d'authentification une clé de chiffrement privée ;
- récupérer dans l'image mémoire chiffrée un bloc de données chiffré contenant l'adresse claire du mot à écrire ;
- déchiffrer le bloc chiffré avec la clé de chiffrement privée; et
- écrire le mot à l'adresse claire dans le bloc déchiffré.

11. Un produit programme d'ordinateur, ledit programme d'ordinateur comprenant des instructions de code permettant d'effectuer les étapes de la méthode selon l'une quelconque des revendications 8 à 10, lorsque ledit programme est exécuté sur un ordinateur.

**Patentansprüche**

1. Vorrichtung zum Ausführen verschlüsselter Programme in einer Cloud-Informatikumgebung bestehend aus einer Mehrzahl von VM-(Virtual Machine)-Servern, wobei jeder VM-Server einen Prozessor, der eine Hypervision-Software zum Zuweisen virtueller Maschinen zu Client-Terminals über ein Anwendernetzwerk ausführen kann, und mindestens einen Authentifikationsserver umfasst, der eine authentifizierte bilaterale Verbindung zwischen einem Client-Terminal und der Cloud aufbauen kann, wobei die Vorrichtung Folgendes umfasst:

   - Mittel zum Aufbauen einer bilateral authentifizierten Verbindung zwischen einem Client-Terminal und der Cloud;
   - ein Modul zum Erzeugen eines verschlüsselten Speicherbildes für eine dem Client-Terminal zugeordnete virtuelle Maschine als Reaktion auf eine von dem Client-Terminal empfangene Cloud-Verbindungsanforderung; und
   - ein Modul zur Ausführung von On-the-Fly-Ver- und -Entschlüsselungsoperationen an mit dem verschlüsselten Speicherbild assoziierten Lese/Schreib-Daten als Reaktion auf von dem Prozessor der virtuellen Maschine empfangenen Anforderungen zum Lesen/Schreiben von Daten in dem verschlüsselten Speicherbild;

   wobei die Vorrichtung **dadurch gekennzeichnet ist, dass**:

   - das Modul zum Erzeugen eines verschlüsselten Speicherbildes Mittel umfasst zum:
   - Erzeugen eines privaten Verschlüsselungsschlüssels zum Zuweisen eines virtuellen Speicherbilds zu dem Client-Terminal;
   - Herunterladen des zugewiesenen virtuellen Speicherbildes auf das Client-Terminal;
   - Verschlüsseln des zugewiesenen virtuellen Speicherbildes; und
   - Herunterladen des zugewiesenen und verschlüsselten virtuellen Speicherbildes auf die Cloud; und
   - wobei die Mittel zum Aufbauen der authentifizierten Verbindung zwischen dem Client-Terminal und der Cloud Mittel des Chipkartenlesetyps, gekoppelt mit dem Client-Terminal zum Berechnen eines Verschlüsselungsschlüssels in Abhängigkeit von einem auf der Chipkarte gespeicherten persönlichen Code, und Mittel umfassen, gekoppelt mit einem Authentifizierungsserver der Cloud zum Bewirken einer Authentifizierung beim Empfang des persönlichen Codes.

2. Vorrichtung nach Anspruch 1, bei der der persönliche Code ein 128-Bit-Langzeitgeheimnis ist.

3. Vorrichtung nach einem der Ansprüche 1 bis 2, bei der der für eine virtuelle Maschine erzeugte private Verschlüsselungsschlüssel von dem persönlichen Code abhängig ist.

4. Vorrichtung nach einem der Ansprüche 1 bis 3, bei der der private Verschlüsselungsschlüssel auf dem Authentifizierungsserver gespeichert ist.

5. Vorrichtung nach Anspruch 4, bei der die Ausführung einer On-the-Fly-Ver- oder -Entschlüsselungsoperation als Reaktion auf eine Anforderung zum Lesen eines Wortes an einer klaren Adresse des Speichers von einem der Server besteht aus:

   - Empfangen des privaten Verschlüsselungsschlüssels von dem Authentifizierungs server;
   - Wiederherstellen eines die klare Adresse des zu lesenden Wortes enthaltenden verschlüsselten Datenblocks in dem verschlüsselten Speicherbild;
   - Entschlüsseln des verschlüsselten Blocks mit dem privaten Verschlüsselungsschlüssel;
   - Extrahieren des zu lesenden Wortes in dem entschlüsselten Block; und
   - Senden des extrahierten Wortes zum Prozessor des einen der Server.

6. Vorrichtung nach Anspruch 4, bei der die Ausführung einer On-the-Fly-Ver- oder -Entschlüsselungsoperation als Reaktion auf eine Anforderung zum Schreiben eines Wortes auf eine klare Adresse in dem Speicher des einen der Server besteht aus:

   - Empfangen des privaten Verschlüsselungsschlüssels von dem Authentifizierungs server;
   - Wiederherstellen eines die klare Adresse des zu schreibenden Wortes enthaltenden verschlüsselten Datenblocks in dem verschlüsselten Speicherbild;
   - Entschlüsseln des verschlüsselten Blocks mit dem privaten Verschlüsselungsschlüssel; und
   - Schreiben des Wortes auf die klare Adresse in dem entschlüsselten Block.

7. Vorrichtung nach einem der Ansprüche 1 bis 6, die ferner ein Modul zum Verwalten von Unterbrechungen umfasst.

8. Verfahren zum Ausführen von verschlüsselten Programmen, durchgeführt in einer Cloud-Informatikumgebung bestehend aus einer Mehrzahl von VM-(Virtual Machine)-Servern, wobei jeder VM-Server einen Prozessor umfasst, der eine Hypervision-Software zum Zuweisen von virtuellen Maschinen zu Client-Terminals über ein Anwendernetzwerk ausführen kann, und mindestens einen Authentifikationsserver umfasst, der eine bilateral authentifizierte Verbindung zwischen einem Client-Terminal und der Cloud aufbauen kann, wobei das Verfahren die folgenden Schritte beinhaltet:

- Erzeugen, nach dem Aufbauen einer bilateral authentifizierten Verbindung zwischen einem Client-Terminal und der Cloud, eines verschlüsselten Speicherbildes für eine dem Client-Terminal zugewiesene virtuelle Maschine als Reaktion auf eine von dem Client-Terminal empfangene Anforderung für eine Verbindung mit der Cloud; und
- Ausführen, als Reaktion auf von dem Prozessor der virtuellen Maschine empfangene Datenlese-/-schreibanforderungen in dem verschlüsselten Speicherbild, von On-the-Fly-Ver- und -Entschlüsselungsoperationen an Lese/Schreib-Daten, assoziiert mit dem verschlüsselten Speicherbild,

wobei das Verfahren **dadurch gekennzeichnet ist, dass**:

- der Schritt des Erzeugens eines verschlüsselten Speicherbildes ferner die folgenden Schritte beinhaltet:
- Erzeugen eines privaten Verschlüsselungsschlüssels zum Zuweisen eines virtuellen Speicherbildes zu dem Client-Terminal;
- Herunterladen des zugewiesenen virtuellen Speicherbildes auf das Client-Terminal;
- Verschlüsseln des zugewiesenen virtuellen Speicherbildes;
- Herunterladen des zugewiesenen und verschlüsselten virtuellen Speicherbildes auf die Cloud; und
- der Schritt zum Aufbauen der authentifizierten Verbindung zwischen dem Client-Terminal und der Cloud einen Schritt des Berechnens eines Verschlüsselungsschlüssels in Abhängigkeit von einem persönlichen Code, der auf einer Chipkarte gespeichert ist, die von Mitteln des Chipkartenlesetyps gelesen wird, gekoppelt mit dem Client-Terminal, und einen Schritt des Authentifizierens des persönlichen Codes beim Empfang des Codes durch den Authentifizierungsserver beinhaltet.

9. Verfahren nach Anspruch 8, bei dem die Ausführung einer On-the-Fly-Ver- oder - Entschlüsselungsoperation als Reaktion auf eine Anforderung zum Lesen eines Wortes an einer klaren Adresse des Speichers des einen der Server erfolgt und die folgenden Schritte beinhaltet:

- Empfangen eines privaten Verschlüsselungsschlüssels von dem Authentifizierungs server;
- Wiederherstellen eines die klare Adresse des zu lesenden Wortes enthaltenden verschlüsselten Datenblocks in dem verschlüsselten Speicherbild;
- Entschlüsseln des verschlüsselten Blocks mit dem privaten Verschlüsselungsschlüssel;
- Extrahieren des zu lesenden Wortes in dem entschlüsselten Block; und
- Senden des extrahierten Wortes zu dem Prozessor des einen der Server.

10. Verfahren nach Anspruch 8, bei dem die Ausführung einer On-the-Fly-Ver- oder - Entschlüsselungsoperation als Reaktion auf eine Anforderung zum Schreiben eines Wortes auf eine klare Adresse in dem Speicher des einen der Server erfolgt und die folgenden Schritte beinhaltet:

- Empfangen eines privaten Verschlüsselungsschlüssels von dem Authentifizierungs server;
- Wiederherstellen eines die klare Adresse des zu schreibenden Wortes enthaltenden verschlüsselten Datenblocks in dem verschlüsselten Speicherbild;
- Entschlüsseln des verschlüsselten Blocks mit dem privaten Verschlüsselungsschlüssel; und
- Schreiben des Wortes auf die klare Adresse in dem entschlüsselten Block.

11. Computerprogrammprodukt, wobei das Computerprogramm Code-Befehle umfasst, die es zulassen, die Schritte des Verfahrens nach einem der Ansprüche 8 bis 10 durchzuführen, wenn das Programm auf einem Computer ausgeführt wird.

**Claims**

1. A device for executing encrypted programs in a cloud computing environment composed of a plurality of virtual machine servers VM, each VM server comprising a processor able to execute a hypervisor software to assign virtual machines to client terminals via a user network, and at least one authentication server able to establish a bilaterally authenticated connection between a client terminal and the cloud, the device comprising:

- means for establishing a bilaterally authenticated connection between a client terminal and the cloud;
- a module for generating an encrypted memory image for a virtual machine assigned to said client terminal in response to a connection request to the cloud received from said client terminal; and
- a module for executing on-the-fly encryption and decryption operations of read/write data associated with said encrypted memory image, in response to data read/write requests in said encrypted memory image, received by the processor of said virtual machine;

the device being **characterized in that**:

- the encrypted memory image generation module comprises means for:
- generating a private encryption key to assign a virtual memory image to said client terminal;
- downloading on said client terminal the assigned virtual memory image;
- encrypting the assigned virtual memory image; and
- downloading the assigned and encrypted virtual memory image on the cloud; and
- the means for establishing the authenticated connection between said client terminal and the cloud comprise chip card reader type means coupled to said client terminal for calculating an encryption key as a function of a personal code stored on the chip card and means coupled to a cloud authentication server to perform an authentication upon reception of the personal code.

2. The device according to claim 1, in which the personal code is a long-term secret of 128 bits.

3. The device according to any one of claims 1 to 2 wherein the private encryption key generated for a virtual machine is a function of the personal code.

4. The device according to any one of claims 1 to 3 wherein the private encryption key is stored on the authentication server.

5. The device according to claim 4 in which the execution of an on-the-fly encryption or decryption operation performed in response to a request to read a word at a clear address in the memory of said one of the servers consists in:

- receiving the private encryption key from the authentication server;
- retrieving from the encrypted memory image an encrypted data block containing the clear address of the word to be read;
- decrypting the encrypted block with the private encryption key;
- extracting the word to read in the decrypted block; and
- sending the extracted word to the processor of said one of the servers.

6. The device according to claim 4 in which the execution of an on-the-fly encryption or decryption operation performed in response to a request to write a word at a clear address in the memory of said one of the servers consists in:

- receiving from the authentication server the private encryption key;
- recovering from the encrypted memory image an encrypted data block containing the clear address of the word to be written;
- decrypting the encrypted block with the private encryption key; and
- writing the word at the clear address in the decrypted block.

7. The device according to any one of claims 1 to 6 further comprising an interrupt management module.

8. A method for executing encrypted programs, performed in a cloud computing environment composed of a plurality of servers of VM virtual machines, each VM server comprising a processor able to execute a hypervisor software to assign virtual machines to client terminals via a user network, and at least one authentication server able to establish a bilaterally authenticated connection between a client terminal and the cloud, the method comprising the steps of:

- after the establishment of a bilaterally authenticated connection between a client terminal and the cloud, generating an encrypted memory image for a virtual machine assigned to said client terminal in response to a connection request to the cloud received from said client terminal; and
- in response to data read/write requests in said encrypted memory image, received by the processor of said virtual machine, executing on-the-fly encryption and decryption operations of the read/write data associated with said encrypted memory image ,

the method being **characterized in that**:

- the step for generating an encrypted memory image further comprises the steps of:
- generating a private encryption key to assign a virtual memory image to said client terminal;
- downloading on said client terminal the assigned virtual memory image;
- encrypting the assigned virtual memory image;
- downloading the assigned and encrypted virtual memory image on the cloud; and
- the step of establishing the authenticated connection between said client terminal and the cloud comprises a step of calculating an encryption key in function of a personal code stored on a chip card read by chip card reader type means coupled to said client terminal and a step of authenticating the personal code upon reception of the code by the authentication server.

9. The method according to claim 8, in which the execution of an on-the-fly encryption or decryption is performed in response to a request to read a word at a clear address in the memory of said one of the servers and includes the steps of:

   - receiving from the authentication server a private encryption key;
   - retrieving from the encrypted memory image an encrypted data block containing the clear address of the word to be read;
   - decrypting the encrypted block with the private encryption key;
   - extracting the word to read in the encryption block; and
   - sending the extracted word to the processor of said one of the servers.

10. The method according to claim 8, in which the execution of an on-the-fly encryption or decryption is performed in response to a request to write a word at a clear address in the memory of said one of the servers and includes the steps of:

    - receiving from the authentication server a private encryption key;
    - recovering from the encrypted memory image an encrypted data block containing the clear address of the word to be written;
    - decrypting the encrypted block with the private encryption key; and
    - writing the word at the clear address in the decrypted block.

11. A computer program product, said computer program comprising code instructions making it possible to carry out the steps of the method according to any one of claims 8 to 10, when said program is executed on a computer.

FIG.1

FIG.2

nuage

Client(104,106)          (206)          (116)          (112)

302

RANDclient ⟶

⟵ RANDcloud

$T_{VM}$=RANDclient+RANDcloud ⟶

$T_{VM}$ ⟶

304   $K_{VM}$=$f_{LTS}$($T_{VM}$)          ⟵ $K_{VM}$=$f_{LTS}$($T_{VM}$)

⟵ fdfdfdfd

306   Chiffrement de
l'image mémoire de
la VM avec $K_{VM}$

⟶ 308

## FIG.3

| |
|---|
| Configuration HSM avec jeton publique de la VM |

402

| |
|---|
| Récupération de la clef privée de la VM |

404

| |
|---|
| Activation du chiffrement à la volée |

406

| |
|---|
| Restauration de contexte |

408

| |
|---|
| Exécution du code applicatif VM |

410

## FIG.4

Sauvegarde de contexte (en zone chiffrée) — 502

Mise à zéro des registres du processeur — 504

Flush des caches — 506

Désactivation du chiffrement à la volée — 508

Exécution du code hyperviseur — 510

## FIG.5

Changement des registres — 602

Sauvegarde de contexte (en zone chiffrée) — 604

Mise à zéro des registres du processeur
(excepté registres de paramétrage de l'interruption) — 606

Flush des caches — 608

Désactivation du chiffrement à la volée — 610

Exécution du code hyperviseur
(entrée/sortie de block de données chiffrés) — 612

## FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120173866 A1, de R. Ashok
- US 6895506 B, de L. Abu-Husein

**Littérature non-brevet citée dans la description**

- **DE A. AVERBUCH et al.** *An efficient VM-based software protection,* 2011, 121-128